# EUROPEAN PATENT APPLICATION

(11) **EP 1 785 327 A2**
(43) Date of publication of application: **16.05.2007**
(21) Application number: 06255692.3
(22) Date of filing: 04.11.2006
(51) Int. Cl.: B60W 30/18, B60W 10/06, B60W 10/10

(54) **Drive control for a vehicle**

(30) Priority: 09.11.2005 JP 2005324766; 25.10.2006 JP 2006290026
(71) Applicant: NISSAN MOTOR CO., LTD., Yokohama-shi, Kanagawa 221-0023 (JP)
(72) Inventor: Arai, Takahisa, c/o Nissan Motor Co., Ltd., Yokohama-shi Kanagawa 221-0023 (JP)
(74) Representative: Holmes, Matthew William

(57) **Abstract**

A vehicle drive control apparatus is configured to achieve acceleration control with improved mileage during increased engine braking control. During the time that control to increase engine braking force is being performed together with fuel being cut to the engine, the apparatus changes the change gear ratio of a continuously variable transmission (30), upon detecting depression of the accelerator pedal from a coasting gear ratio for a downhill driving mode to a higher coasting gear ratio for a normal driving mode such that the rotational engine speed of the engine (40) goes to a lower speed than the engine speed during engine braking increase control. Once the gear ratio of the continuously variable transmission has changed to the coasting gear ratio for normal driving mode, a fuel injection operation is performed so that fuel is injected into the engine. The control may consider additional information from a camera (15) or a GPS system (17).

## Description

The present invention generally relates to drive control for a vehicle and particularly, but not exclusively, to a drive control apparatus for a vehicle that affords significantly lower fuel consumption during driving. Aspects of the invention also relate to a method and to a vehicle.

Fuel cutoff control, in which the supply of fuel is interrupted when the driver releases the accelerator pedal, is a commonly employed control method for improving fuel consumption (hereinafter termed mileage) during driving (see for example, Japanese Laid-Open Patent Publication No. 2005-75179). In this publication, it is asserted that improved mileage can be achieved through fuel cutoff control, while performing vehicle drive control in a manner affording acceleration and deceleration feel that is satisfactory for the driver.

It has been discovered that typically in a vehicle driving on a downhill slope or the like, when the driver releases the accelerator pedal and simply coasts, the engine itself provides resistance and applies engine braking. Particularly in a vehicle equipped with automatic shift, where the accelerator pedal has been released on a downhill slope, the fuel feed to the engine has been cut, and the vehicle is coasting, the gear is shifted to low gear to automatically increase the engine speed and increase the engine braking force, in order to control the vehicle so as to maintain a constant speed.

With the method disclosed in Japanese Laid-Open Patent Publication No. 2005-75179, however, depending on the level of acceleration demand by the driver by depressing the accelerator pedal, it may become necessary to suspend fuel cutoff control and resume fuel feed to accelerate the vehicle, despite the fact that control to increase braking force is ongoing. Under conditions of high engine speed resulting from control to increase braking force, i.e. under conditions requiring more fuel during fuel feed, in the event that fuel is injected and the vehicle accelerated by means of depressing the accelerator pedal in this way, the problem of appreciably lowered mileage occurs.

It is an aim of the invention to address this problem and to improve upon known technology. Other aims and advantages of the invention will become apparent from the following description, claims and drawings.

Aspects of the invention therefore provide an apparatus, a method and a vehicle as claimed in the appended claims.

According to another aspect of the invention there is provided a vehicle drive control apparatus comprising an engine, a transmission connected to the engine for transmitting rotary torque generated by the engine to a drive shaft, an accelerator depression sensor configured and arranged to detect depression of an accelerator pedal, a vehicle traveling environment detection device configured to detect a traveling environment, a vehicle driving environment condition determination section configured to determine a current vehicle driving environment condition based on the traveling environment detected by the vehicle traveling environment detection device; and a controller configured to determine if the current vehicle driving environment condition determined by the vehicle driving environment condition determination section indicates a driving environment condition requiring braking power, perform an engine braking force control to apply engine braking by changing a change gear ratio of the transmission from a first gear ratio to a lower gear ratio so that the engine speed shifts to a higher speed than a normal driving speed of the engine upon determining the current driving environment condition outputted by the vehicle driving environment condition determination section requires braking power, change the change gear ratio of the transmission from the lower gear ratio to a higher gear ratio so that the speed of the engine will shift to the normal driving speed of the engine when depression of the accelerator pedal is sensed by the depression sensor during the engine braking force control and performance of a fuel cutting operation to the engine and perform a fuel injection control to inject fuel into the engine once the change gear ratio of the transmission has shifted to the higher gear ratio.

In an embodiment, the controller is further configured to calculate an accelerator pedal depression rate of the accelerator pedal, determine a shifting speed which represents an operating speed of the transmission, based on the accelerator pedal depression rate, when the change gear ratio of the transmission shifts from the lower gear ratio to the higher gear ratio and perform a shifting speed control so that the change gear ratio of the transmission will change at the shifting speed so determined.

In an embodiment, the controller is further configured to increase the shifting speed in association with a higher rate at which based on the accelerator pedal depression rate.

In an embodiment, the vehicle traveling environment detection device includes an image acquiring device configured to acquire an image of a preceding traveling condition ahead of the traveling vehicle as part of the traveling environment.

In an embodiment, the vehicle driving environment condition determination section is further configured to determine at least one of gradient information and a preceding road curvature information as the current vehicle driving environment condition from the image detected by the image acquiring device.

In an embodiment, the vehicle traveling environment detection device includes a current vehicle location device configured to detect a current vehicle location as part of the traveling environment.

In an embodiment, the vehicle driving environment condition determination section is further configured to determine at least one of gradient information and a preceding road curvature information as the current vehicle driving environment condition from the current vehicle location detected by the current vehicle location device and map/road information.

In an embodiment, the controller is further configured to determine if the current vehicle driving environment condition is one of a preceding downhill road and a preceding curved road that requires the engine braking force control.

In an embodiment, the vehicle driving environment condition determination section and the controller are constituted as a single calculation and control unit.

According to another aspect of the invention there is provided a vehicle drive control apparatus comprising means for determining a current vehicle driving environment condition indicative of a driving environment condition requiring braking power, means for apply engine braking by changing a change gear ratio of a transmission from a first gear ratio to a lower gear ratio so that the engine speed shifts to a higher speed than a normal driving speed of the engine upon determining the current driving environment condition outputted by the vehicle driving environment condition determination section requires braking power, means for changing the change gear ratio of the transmission from the lower gear ratio to a higher gear ratio so that the speed of the engine will shift to the normal driving speed of the engine upon detecting depression of an accelerator pedal during performing the engine braking force control and performance of a fuel cutting operation to the engine and means for injecting fuel into the engine once the change gear ratio of the transmission has shifted to the higher gear ratio.

According to a further aspect of the invention there is provided a vehicle drive control method comprising detecting depression of an accelerator pedal of a vehicle, detecting a vehicle travel environment of the vehicle, determining if a vehicle current driving environment condition indicates a driving environment condition requiring braking power based on the vehicle travel environment of the vehicle that was detected, performing an engine braking force control to apply engine braking by changing a change gear ratio of the transmission from a first gear ratio to a lower second gear ratio so that the engine speed shifts to a higher speed than a normal driving speed of the engine upon determining the current driving environment condition exists that requires the braking power, changing the change gear ratio of the transmission from the lower gear ratio to a higher gear ratio so that the engine speed shifts to the normal driving speed of the engine upon detecting depression of the accelerator pedal during the engine braking force control and performance of a fuel cutting operation to the engine and injecting fuel to the engine once the change gear ratio of the transmission has shifted to the higher gear ratio.

For example, a vehicle drive control apparatus in accordance with an embodiment is basically provided with an engine, a transmission, an accelerator depression sensor, a vehicle traveling environment detection device, a vehicle driving environment condition determination section and a controller. The transmission is connected to the engine for transmitting rotary torque generated by the engine to a drive shaft. The accelerator depression sensor is configured and arranged to detect depression of an accelerator pedal. The vehicle traveling environment detection device is configured to detect a traveling environment. The vehicle driving environment condition determination section is configured to determine a current vehicle driving environment condition based on the traveling environment detected by the vehicle traveling environment detection device. The controller is configured to: determine if the current vehicle driving environment condition determined by the vehicle driving environment condition determination section indicates a driving environment condition requiring braking power; perform an engine braking force control to apply engine braking by changing a change gear ratio of the transmission from a first gear ratio to a lower gear ratio so that the engine speed shifts to a higher speed than a normal driving speed of the engine upon determining the current driving environment condition outputted by the vehicle driving environment condition determination section requires braking power; change the change gear ratio of the transmission from the lower gear ratio to a higher gear ratio so that the speed of the engine will shift to the normal driving speed of the engine when depression of the accelerator pedal is sensed by the depression sensor during the engine braking force control and performance of a fuel cutting operation to the engine; and perform a fuel injection control to inject fuel into the engine once the change gear ratio of the transmission has shifted to the higher gear ratio.

Embodiments of the invention therefore provide a vehicle drive control apparatus and a vehicle drive control process which may afford improved acceleration control with appreciably improved mileage, even in instances where the accelerator pedal is depressed while fuel feed to the engine is cut off.

Within the scope of this application it is envisaged that the various aspects, embodiments and alternatives set out in the preceding paragraphs, in the claims and in the following description may be taken individually or in any combination thereof.

The present invention will now be described, by way of example only, with reference to the accompanying drawings in which:
Figure 1 is an illustration depicting an arrangement of a vehicle drive control apparatus in accordance with an embodiment of the present invention;
Figure 2 is a schematic diagram of the vehicle drive control apparatus installed in a vehicle in accordance with the illustrated embodiment of the present invention;
Figure 3 is a flowchart showing a control process executed by the vehicle drive control apparatus in accordance with the illustrated embodiment of the present invention; and
Figure 4 is a table stored in memory in the vehicle drive control apparatus for associating accelerator pedal depression rate with CVT shift speed in accordance with the illustrated embodiment of the present invention.

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

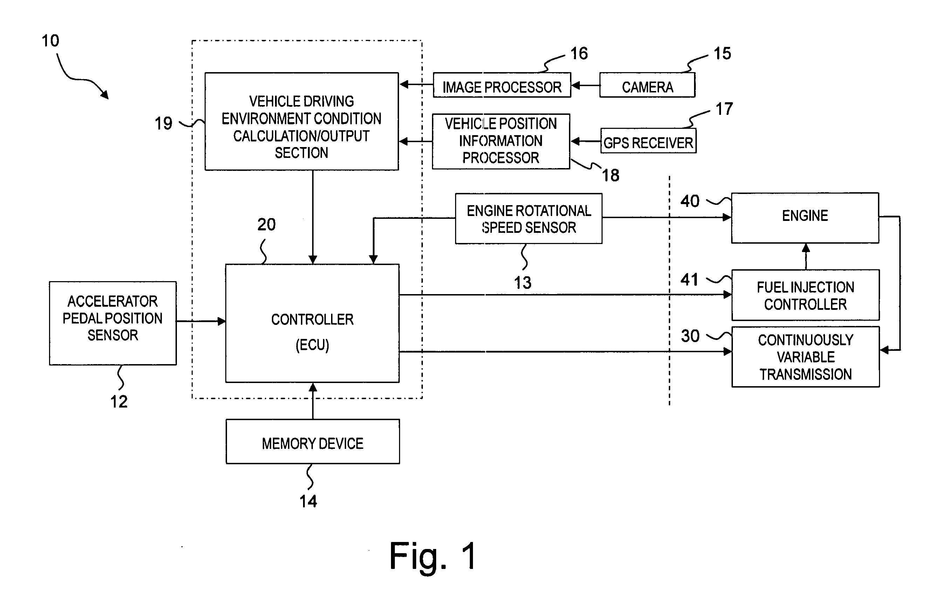

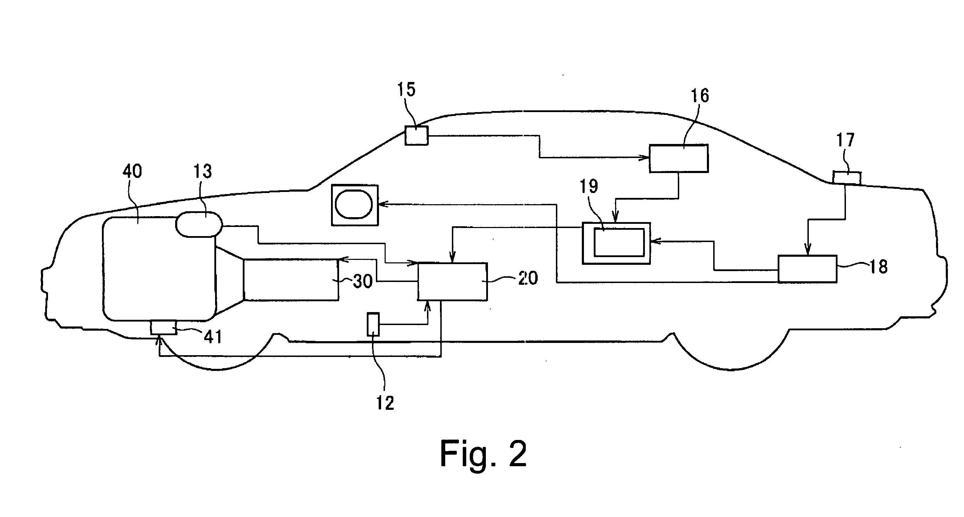

Referring initially to Figures 1 and 2, a vehicle drive control apparatus is illustrated in accordance with one embodiment of the present invention. As shown in Figure 1, the vehicle drive control apparatus 10 basically includes an accelerator pedal position sensor 12, an engine rotational speed sensor 13, a memory or storage device 14, a camera or imaging device 15, an image processor 16, a GPS (global positioning system) receiver 17, a position information processor 18, a driving environment condition calculation/output portion 19, and an electronic control unit (ECU) 20 (hereinafter referred to as "controller 20"). As particularly shown in Figure 2, the vehicle drive control apparatus 10 is installed in a vehicle that is equipped with, among other things, a continuously variable transmission (CVT) 30 and an engine 40. The engine 40 has a fuel injection control device (fuel injector) 41 that is controlled by the controller 20 in response to control signals from the engine rotational speed sensor 13, as described later. The continuously variable transmission 30 is connected to the engine 40 in a conventional manner such that rotation/torque of the output shaft of the engine 40 is transmitted to the drive wheels via the continuously variable transmission 30. By executing control of the continuously variable transmission 30 as well as control of the fuel injection controller 41 that injects fuel into the engine 40, this vehicle drive control apparatus 10 can appreciably improve fuel consumption (hereinafter referred to as "mileage") during driving.

The continuously variable transmission 30 is a belt type or toroidal type transmission that continuously varies its change gear ratio (also called speed change ratio) in response to control signals from the controller 20, the transmission 30 controls the drive power corresponding to change in change gear ratio.

The accelerator pedal position sensor 12 is attached to the accelerator pedal such that it is configured and arranged to detect a depression angle of the accelerator pedal by the driver. The accelerator pedal position sensor 12 outputs the detected accelerator pedal depression angle as an accelerator angle signal to the controller 20. As will be discussed later, the accelerator angle signal outputted by the accelerator pedal position sensor 12 is also used for the purpose of determining whether the accelerator pedal is being depressed or not being depressed.

The engine rotational speed sensor 13 is a sensor that it is configured and arranged to detect an engine rotational engine speed (rpm's) of the engine 40 of the vehicle. The engine rotational speed sensor 13 outputs the detected engine speed as a speed sensor signal to the controller 20.

The memory device 14 is preferable a ROM (read-only memory) device, that has prestored data and various programs for execution by the controller 20. The data for controlling the continuously variable transmission 30 are also prestored in a table form in the memory device 14. The data prestored in table form in the memory device 14 shall be discussed in detail later.

As shown in Figure 2, the camera 15 is installed at the front of the vehicle, and is configured and arranged to capture images of the traveling conditions ahead of the vehicle. Image information captured by the camera 15 is outputted to the image processor 16. By performing image processing using images captured by the camera 15, the image processor 16 acquires the traveling conditions of the road ahead on which the vehicle is traveling, the running conditions of the vehicle, information regarding preceding obstacles, and so on. The image processor 16 outputs the various kinds of information so acquired to the vehicle driving environment condition determination section 19.

The GPS receiver 17, using its GPS antenna to receive signals transmitted from GPS satellites, carries out position measurement by GPS navigation and derives the absolute vehicle position (latitude and longitude) of the vehicle. The absolute vehicle position derived in this way is output to the position information processor 18.

The position information processor 18 calculates the current position of the vehicle from the absolute vehicle position information acquired by the GPS receiver 17, and by using map data or road data read out, for example, from a removable storage medium such as a CD-ROM (compact disk-read only memory) or DVD-ROM (digital versatile disk-read only memory) or from a fixed storage medium such as an HD (hard disk; not shown), acquires road information for the surrounding area of the vehicle, and outputs the information to the vehicle driving environment condition determination section 19.

The vehicle driving environment condition determination section 19 integrates the traveling or environment conditions of the road ahead, the traveling or environment conditions of the vehicle, information regarding obstacles, and other aspects output by the image processor 16, and the vehicle surrounding area road information output by the position information processor 18, to derive current vehicle driving environment conditions for the vehicle. Thus, the camera 15, the image processor 16, the GPS receiver 17 and the position information processor 18 constitute a vehicle traveling environment detection device that is configured to detect a traveling environment, i.e., at a minimum curvature information for curves on the road and gradient information for hills. The vehicle driving environment condition determination section 19 is configured to determine the current vehicle driving environment condition based on the traveling environment detected by the vehicle traveling environment detection device (components 15 to 18). In other words, the current vehicle driving environment condition derived by the vehicle driving environment condition determination section 19 include at a minimum curvature information for curves on the road and gradient information for hills. The vehicle driving environment condition determination section 19 then outputs the vehicle driving environment conditions so derived to the controller 20. While the vehicle driving environment condition determination section 19 and the controller 20 are illustrated as a separate components, it will be apparent form this disclosure that the vehicle driving environment condition determination section 19 and the controller 20 are constituted preferably integrated into a single calculation and control unit

The controller 20 preferably includes a microcomputer with a gear shifting and fuel injection control programs that controls the gear shifting operations and the fuel injection operations as discussed below. The controller 20 can also include other conventional components such as an input interface circuit and an output interface circuit. In other words, the microcomputer of the controller 20 is programmed to control carry out the gear shifting operations and the fuel injection operations in accordance with the present invention. It will be apparent to those skilled in the art from this disclosure that the precise structure and algorithms for the controller 20 can be any combination of hardware and software that will carry out the functions of the present invention. In other words, "means plus function" clauses as utilized in the specification and claims should include any structure or hardware and/or algorithm or software that can be utilized to carry out the function of the "means plus function" clause.

The controller 20 is configured to carry out overall control of the vehicle drive control apparatus 10. On the basis of the various information output by the accelerator pedal position sensor 12, the engine rotational speed sensor 13, and the vehicle driving environment condition calculation/output portion 19, as well as information stored in the memory device 14, the controller 20 switches drive modes so as to afford optimal driving, and executes control of the change gear ratio of the continuously variable transmission 30 and control of the fuel injection timing to the engine 40 by the fuel injection controller 41.

From the vehicle driving environment conditions outputted by the vehicle driving environment condition determination section 19, the controller 20 determines whether, for example, the vehicle is driving downhill, or is entering a curve. Then, depending on the result of the decision, the controller 20 controls the change gear ratio of the continuously variable transmission 30 to control engine braking, as well as controlling the fuel injection timing to the engine 40 by the fuel injection controller 41.

Typically, when controlling the engine braking force, the continuously variable transmission 30 is shifted to a low gear ratio to increase the engine speed with the aim of increasing the engine braking force. However, with the engine 40 running at such high speed, the level of air intake to the engine 40 for a given time period is very high. Thus, while driving with the fuel cut off under these conditions, if fuel is being supplied to the engine 40 should resume in association with an acceleration demand produced by the driver depressing the accelerator pedal, fuel will be supplied at a level commensurate with the increased air intake, resulting in extremely high consumption of fuel and poor mileage.

Accordingly, under conditions of the increasing engine braking force control carried out in this way and further with the supply of fuel to the engine 40 having been cut off, the controller 20 of the vehicle drive control apparatus 10 will, in the event that the driver should depress the accelerator pedal to make an acceleration demand, perform control of the change gear ratio of the continuously variable transmission 30 and control of the fuel injection controller 41 in such a way as to avoid poor mileage, and to actually improve mileage. The method for doing so shall be described in detail below.

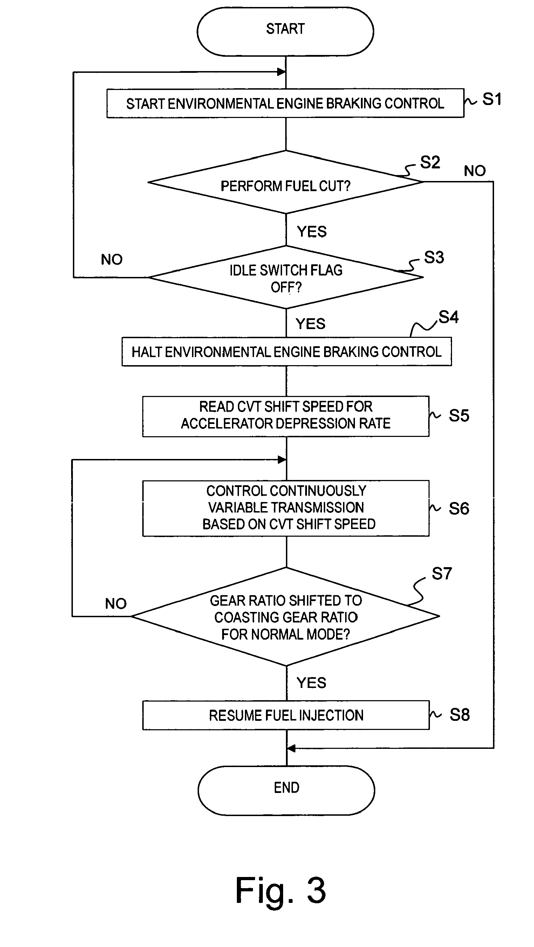

The control process of the controller 20 in response to an acceleration demand by the driver during engine braking control shall be described using the flowchart shown in Figure 3. For purposes of discussion the vehicle equipped with the vehicle drive control apparatus 10 is assumed to be entering a downhill slope from a flat stretch of road. However, the invention is not limited to such a case, and can be implemented in any instance where engine braking control takes place, such as when the vehicle enters a curve, for example.

In Step S1, on the basis of a vehicle driving environment condition output by the vehicle driving environment condition determination section 19, the controller 20 determines that the vehicle is currently driving on a downhill slope, and changes the driving mode from the normal driving mode (first gear ratio) to a downhill driving mode (second gear ratio) so as to apply a downhill engine brake. Specifically, in response to shifting of the driving mode to downhill driving mode, the controller 20 applies an engine braking force control so as to shift the continuously variable transmission 30 from a first gear ratio serving as a coasting gear ratio for normal driving mode (generally the highest gear ratio that the continuously variable transmission can attain) with the accelerator pedal being released to a lower second gear ratio serving as a coasting gear ratio for downhill driving mode with the accelerator pedal being released, which results in an increase in the engine speed of the engine 40 to a higher speed than during normal driving.

In Step S2, the controller 20 determines whether the accelerator pedal is being depressed (i.e. the idle switch flag is OFF) or not being depressed (i.e. the idle switch flag is ON) from the accelerator angle signal indicating the depression angle of the accelerator pedal sensed and output by the accelerator pedal position sensor 12. Then, the controller 20, on the basis of this decision, now determines whether to cut the fuel being fed to the engine 40. In the event that the accelerator pedal is not depressed, that is, the idle switch flag is ON, the controller 20 then determines to cut the fuel being fed to the engine 40, and proceeds to Step S3. However, if the accelerator pedal is depressed, i.e., the idle switch flag is OFF, then the controller 20 determines not to cut the fuel to the engine 40, and terminates the process.

In Step S3, with the supply of fuel to the engine 40 being cut off, the controller 20 determines whether the accelerator pedal has been depressed so that the idle switch flag has changed from ON to OFF. In the event that the idle switch flag has changed from ON to OFF, then the controller 20 proceeds to Step S4, or if the idle switch flag remains ON, returns to Step S1.

In Step S4, in response to the idle switch flag having changed from ON to OFF, the controller 20 halts control in the downhill driving mode, in which control was carried out so as to apply engine braking. Subsequently, the controller 20 changes from the downhill driving mode in which engine braking control was carried out, to the normal driving mode in which braking control is not carried out.

In Step S5, the controller 20 calculates a rate of depression of the accelerator pedal, from the amount of displacement of the accelerator pedal depression angle during a prescribed unit of time using the accelerator angle signal indicating the depression angle of the accelerator pedal sensed and output by the accelerator pedal position sensor 12. The rate of depression of the accelerator pedal, rather than being calculated by the controller 20, could instead be acquired with a sensor that can to directly sense the rate of depression.

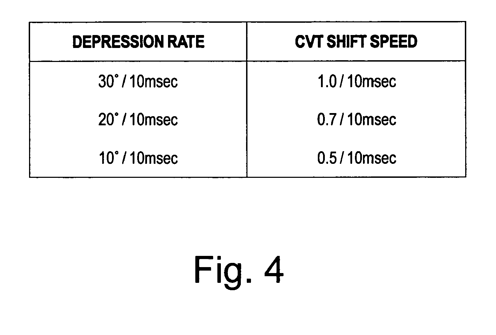

Using the rate of depression of the accelerator pedal calculated in this way, the controller 20 retrieved from the memory device 14 and reads out an engine speed for shifting the continuously variable transmission 30. Specifically, a CVT shift speed representing an operating speed for changing the change gear ratio of the continuously variable transmission 30 has been stored in the memory device 14 in table form and associated with corresponding accelerator pedal depression rates of the accelerator pedal as seen in Figure 4.

For example, as seen in Figure 4, a table associating the accelerator pedal depression rates with the CVT shift speed is illustrated that is stored in the memory device 14. As shown in Figure 4, the accelerator pedal depression rate is expressed as an accelerator pedal depression angle per a 10-msec period, while the CVT shift speed is expressed as a speed per this 10-msec period. As shown in Figure 4, it will be apparent that the CVT shift speed varies depending on the accelerator pedal depression rates, with the CVT shift speed becoming faster in association with a faster accelerator pedal depression rate of the accelerator pedal. Since a faster accelerator pedal depression rate indicates that the driver has demanded a greater acceleration speed, in order to improve acceleration response to such an acceleration demand, it is necessary for the CVT shift speed (operating speed for changing the change gear ratio of the continuously variable transmission 30) to be faster as well.

In Step S6, the controller 20 now shifts the continuously variable transmission 30 at the CVT shift speed retrieved from the memory device 14 such that the coasting gear ratio for normal driving mode is obtained. Specifically, in the downhill driving mode, the continuously variable transmission 30 is shifted by the controller 20 to the lower coasting gear ratio for downhill driving mode which results an increase in the rotational engine speed of the engine 40 in order to increase engine braking force. However, in the normal driving mode, the controller 20 performs a shifting control so as to shift the continuously variable transmission 30 to the higher coasting gear ratio, which reduces the rotational engine speed of the engine 40.

By reducing the rotational engine speed of the engine 40 in this way, the kinetic energy of the vehicle that is freed up from consumption by the engine 40 is utilized as driving energy for the vehicle, in response to the acceleration demand produced by depressing the accelerator pedal.

In Step S7, the controller 20 monitors the rotational engine speed of the engine 40 detected by the engine rotational speed sensor 13, and the change gear ratio of the continuously variable transmission 30. Then, the controller 20 determines whether the gear ratio has shifted to the coasting gear ratio for normal driving mode. In the event that the change gear ratio of the continuously variable transmission 30 has transitioned to the coasting gear ratio for normal driving mode, the controller 20 deems that the rotational speed of the engine 40 has decreased to the desired speed and proceeds to the process of Step S8. In the event that this transition has not taken place, the control process returns to the process of Step S6.

In Step S8, the controller 20 controls the fuel injection controller 41, and injects fuel into the engine 40 in an amount commensurate with the air intake level at that time. In this way, the vehicle drive control apparatus 10 of the present invention is such that under prescribed driving environment conditions, the controller 20 carries out increased engine braking control to shift the gear ratio of the continuously variable transmission 30 to the low gear ratio resulting in an increase in the rotational engine speed of the engine 40 to a higher level than during normal driving, and additionally the fuel to the engine 40 is cut off in response to an acceleration demand produced by depression of the accelerator pedal, first, the gear ratio of the continuously variable transmission 30 will be shifted to the high gear ratio to lower the rotational engine speed of the engine 40. Then, once the rotational engine speed of the engine 40 has dropped to the desired rotational engine speed, fuel in an amount commensurate with the air intake level associated with the lower rotational engine speed will be injected into the engine 40.

Consequently, the amount of injected fuel can be reduced when fuel injection is resumed. Additionally, by lowering the rotational engine speed of the engine 40 while the fuel is cut off, rotation energy equivalent to the drop in speed can be utilized to reaccelerate the vehicle, so reacceleration in response to depression of the accelerator pedal can take place with a lower level of fuel consumption. Mileage can be improved appreciably thereby.

In Step S3 of the flowchart shown in Figure 3, during the time that the accelerator pedal is depressed and the idle switch flag is OFF, the controller 20 performs a fuel cutting operation or control so that fuel is not supplied to the engine 40, during the interval up to Step S8. That is, since fuel is not supplied to the engine 40 during the transition period in which the continuously variable transmission 30 transitions to coasting gear ratio for normal driving mode at the CVT shift speed under the control of the controller 20, the period of fuel cutoff can be extended, and mileage improved.

Additionally, during shifting of the gear ratio of the continuously variable transmission 30 from the low gear ratio to the hi gear ratio, the controller 20 causes the continuously variable transmission 30 to shift at a CVT shift speed that has been determined depending on the depression rate of the accelerator pedal. By so doing, it is possible to attain acceleration control that reflects acceleration demands by the driver, determined by the depression rate of the accelerator pedal.

In particular, the controller 20 causes the continuously variable transmission 30 to shift from the low gear ratio to the hi gear ratio at higher CVT shift speed in association with a higher depression rate of the accelerator pedal, and thus the effect of engine braking can be lessened in concert with the depression rate of the accelerator pedal. Consequently, in the event that the driver depresses the accelerator pedal at a faster rate, the extent of deceleration of the vehicle due to engine braking will be perceived as decreasing faster. That is, by executing the control process of the controller 20 in this manner, the difference between the driver's intention to accelerate by depressing the accelerator pedal on the one hand, and the actual sensation of acceleration experienced by the driver, can be reduced appreciably.

While the embodiment of the present invention herein has described the use of a continuously variable transmission 30 as the transmission, the invention is not limited thereto, and can be implemented analogously in vehicles which employ as the transmission a so-called AT (automatic transmission) instead. Also, while the controller 20 and the vehicle driving environment condition determination section 19 herein have been provided as separate computing units, the invention is not limited to this arrangement, it being possible to instead provide a single computing/control unit, with the function of both of the devices being assumed by this single computing/control unit. It is further possible for the functions of the image processor 16 and the position information processor 18 to be integrated into the single computing/control unit.

### General interpretation of terms

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. Also as used herein to describe the above embodiment(s), the following directional terms "forward, rearward, above, downward, vertical, horizontal, below and transverse" as well as any other similar directional terms refer to those directions of a vehicle equipped with the present invention. Accordingly, these terms, as utilized to describe the present invention should be interpreted relative to a vehicle equipped with the present invention.

The term "detect" as used herein to describe an operation or function carried out by a component, a section, a device or the like includes a component, a section, a device or the like that does not require physical detection, but rather includes determining, measuring, modeling, predicting or computing or the like to carry out the operation or function. The term "configured" as used herein to describe a component, section or part of a device includes hardware and/or software that is constructed and/or programmed to carry out the desired function. Moreover, terms that are expressed as "means-plus function" in the claims should include any structure that can be utilized to carry out the function of that part of the present invention. The terms of degree such as "substantially", "about" and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, the size, shape, location or orientation of the various components can be changed as needed and/or desired. Components that are shown directly connected or contacting each other can have intermediate structures disposed between them. The functions of one element can be performed by two, and vice versa. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

This application claims priority from Japanese Patent Application Nos. 2005-324766, filed 9th November 2005, and 2006-290026, filed 25th October 2006, the contents of which are incorporated herein by reference in their entirety.

## Claims

1. A drive control apparatus for a vehicle comprising:
means for determining a current vehicle driving environment condition indicative of a driving environment condition requiring braking power;
means for apply engine braking by changing a change gear ratio of a transmission from a first gear ratio to a lower gear ratio so that the engine speed shifts to a higher speed than a normal driving speed of the engine upon determining the current driving environment condition outputted by the vehicle driving environment condition determination section requires braking power;
means for changing the change gear ratio of the transmission from the lower gear ratio to a higher gear ratio so that the speed of the engine will shift to the normal driving speed of the engine upon detecting depression of an accelerator pedal during performing the engine braking force control and performance of a fuel cutting operation to the engine; and
means for injecting fuel into the engine once the change gear ratio of the transmission has shifted to the higher gear ratio.A drive control apparatus for a vehicle comprising:

2. An apparatus as claimed in claim 1 comprising:
an engine
a transmission connected to the engine for transmitting rotary torque generated by the engine to a drive shaft;
an accelerator depression sensor for detecting depression of an accelerator pedal;
a vehicle traveling environment detection device for detecting a traveling environment;
a vehicle driving environment condition determination section for determining a current vehicle driving environment condition based on the traveling environment detected by the vehicle traveling environment detection device; and
control means for:
determining if the current vehicle driving environment condition determined by the vehicle driving environment condition determination section indicates a driving environment condition requiring braking power;
performing an engine braking force control to apply engine braking by changing a change gear ratio of the transmission from a first gear ratio to a lower gear ratio so that the engine speed shifts to a higher speed than a normal driving speed of the engine upon determining the current driving environment condition outputted by the vehicle driving environment condition determination section requires braking power;
changing the change gear ratio of the transmission from the lower gear ratio to a higher gear ratio so that the speed of the engine will shift to the normal driving speed of the engine when depression of the accelerator pedal is sensed by the depression sensor during the engine braking force control and performance of a fuel cutting operation to the engine; and
perform a fuel injection control to inject fuel into the engine once the change gear ratio of the transmission has shifted to the higher gear ratio.

3. An apparatus as claimed in claim 2 wherein the control means is arranged to:
calculate an accelerator pedal depression rate of the accelerator pedal;
determine a shifting speed which represents an operating speed of the transmission, based on the accelerator pedal depression rate, when the change gear ratio of the transmission shifts from the lower gear ratio to the higher gear ratio; and
perform a shifting speed control so that the change gear ratio of the transmission will change at the shifting speed so determined.

4. An apparatus as claimed in claim 2 or claim 3 wherein the control means is arranged to increase the shifting speed in association with a higher rate at which based on the accelerator pedal depression rate.

5. An apparatus as claimed in any of claims 2 to 4 wherein the vehicle traveling environment detection device includes an image acquiring device configured to acquire an image of a preceding traveling condition ahead of the traveling vehicle as part of the traveling environment.

6. An apparatus as claimed in claim 5 wherein the vehicle driving environment condition determination section is arranged to determine at least one of gradient information and a preceding road curvature information as the current vehicle driving environment condition from the image detected by the image acquiring device.

7. An apparatus as claimed in any of claims 2 to 6 wherein the vehicle traveling environment detection device includes a current vehicle location device arranged to detect a current vehicle location as part of the traveling environment.

8. An apparatus as claimed in claim 7 wherein the vehicle driving environment condition determination section is arranged to determine at least one of gradient information and a preceding road curvature information as the current vehicle driving environment condition from the current vehicle location detected by the current vehicle location device and map/road information.

9. An apparatus as claimed in any of claims 2 to 8 wherein the control means is arranged to determine if the current vehicle driving environment condition is one of a preceding downhill road and a preceding curved road that requires the engine braking force control.

10. An apparatus as claimed in any of claims 2 to 9 wherein the vehicle driving environment condition determination section and the control means comprises a single calculation and control unit.

11. A control method for a vehicle comprising:
detecting depression of an accelerator pedal of a vehicle;
detecting a vehicle travel environment of the vehicle;
determining if a vehicle current driving environment condition indicates a driving environment condition requiring braking power based on the vehicle travel environment of the vehicle that was detected;
performing an engine braking force control to apply engine braking by changing a change gear ratio of the transmission from a first gear ratio to a lower second gear ratio so that the engine speed shifts to a higher speed than a normal driving speed of the engine upon determining the current driving environment condition exists that requires the braking power;
changing the change gear ratio of the transmission from the lower gear ratio to a higher gear ratio so that the engine speed shifts to the normal driving speed of the engine upon detecting depression of the accelerator pedal during the engine braking force control and performance of a fuel cutting operation to the engine; and
injecting fuel to the engine once the change gear ratio of the transmission has shifted to the higher gear ratio.
